(19) Europäisches Patentamt
European Patent Office
Office européen des brevets

(11) Numéro de publication : **0 030 513**
**B1**

(12) # FASCICULE DE BREVET EUROPÉEN

(45) Date de publication du fascicule du brevet : **05.09.84**

(51) Int. Cl.³ : **C 08 L 77/00**

(21) Numéro de dépôt : **80420138.2**

(22) Date de dépôt : **09.12.80**

(54) **Compositions à base de polyamide, de fibres de verre et d'un composé à insaturation acrylique.**

(30) Priorité : **10.12.79 FR 7930651**

(43) Date de publication de la demande :
**17.06.81 Bulletin 81/24**

(45) Mention de la délivrance du brevet :
**05.09.84 Bulletin 84/36**

(84) Etats contractants désignés :
**AT BE CH DE FR GB IT LI LU NL SE**

(56) Documents cités :
**FR-A- 1 531 153**
**FR-A- 2 243 963**
**CHEMICAL ABSTRACTS, vol. 92, no. 6, 11 fevrier 1980, page 546, abrégé no. 50100c, Columbus, Ohio, US**
**Le dossier contient des informations techniques présentées postérieurement au dépôt de la demande et ne figurant pas dans le présent fascicule.**

(73) Titulaire : **RHONE-POULENC SPECIALITES CHIMIQUES**
**"Les Miroirs" 18, Avenue d'Alsace**
**F-92400 Courbevoie (FR)**

(72) Inventeur : **Locatelli, Jean-Louis**
**Les Charavelles Bt G 10, rue de Charavel**
**F-38200 Vienne (FR)**

(74) Mandataire : **Trolliet, Maurice et al**
**RHONE-POULENC RECHERCHES Service Brevets Chimie et Polymères Centre de Recherches de Saint-Fons B.P. 62**
**F-69192 St-Fons Cedex (FR)**

**EP 0 030 513 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention a pour objet de nouvelles compositions à base de polyamides renforcés par des fibres de verre.

Les polyamides non modifiés, présentent une haute énergie de rupture et sont considérés comme des polymères tenaces.

Quand ils sont renforcés par exemple par des fibres de verre, on peut les utiliser dans de nombreuses applications où les propriétés mécaniques, particulièrement à des températures de l'ordre de 150 à 200 °C, doivent être élevées.

Ces polyamides même renforcés présentent toutefois une certaine déficience concernant la résistance au choc.

De très nombreuses solutions ont été proposées pour résoudre ce problème qui ne sont pas satisfaisantes, le plus souvent dans la mesure où l'amélioration d'une propriété particulière entraîne l'abaissement d'une autre propriété.

Il a maintenant été trouvé des compositions à base de polyamides renforcés par des fibres de verre, caractérisées en ce qu'elles renferment un ou plusieurs composés de formule générale :

$$[CH_2{=}CR{-}CO{-}A]_{\overline{n}}X \qquad (I)$$

dans laquelle :

R représente un atome d'hydrogène ou un radical méthyle ;

n représente un nombre entier égal à 2, 3 ou 4 ;

le symbole A représente un radical —O—, —NH— ou un lien valentiel simple ;

le symbole X, quand A représente un radical —O— ou —NH—, représente : un radical organique de valence n dérivé d'un hydrocarbure àliphatique saturé linaire ou ramifié ayant de 1 à 20 atomes de carbone et pouvant renfermer un ou plusieurs ponts oxygène et une ou plusieurs fonctions hydroxyles ; un radical aralkylène pouvant être ramifié et pouvant comporter un ou plusieurs ponts oxygène ; ou un cycle triazinique di- ou trivalent ;

le symbole X, quand A représente un lien valentiel simple, représente uniquement un cycle triazinique di- ou trivalent.

A titre d'illustration de différents composés de formule (I), utilisables dans les compositions conformes à l'invention, on mentionnera :

les dérivés des acides acryliques ou méthacryliques, en particulier les esters acryliques ou méthacryliques de polyols tels que les tri(méth)acrylates de triméthylolpropane, les di(méth)acrylates d'éthylène glycol, les di(méth)acrylates d'hexane-diol-1,6, les di(méth)acrylates de butane-diol, les tri- et tétra(méth)acrylates de pentaérythritol, les tris(méth)acryloyl-1,3,5 hexahydro-S triazines ; dans ce qui précède, les termes (méth)acrylate, (méth)acryloyl sont utilisés pour désigner à la fois les dérivés de l'acide acrylique et ceux de l'acide méthacrylique.

Dans les compositions conformes à l'invention, la proportion pondérale de produit de formule (I) représente généralement de 0,01 à 10 % et, de préférence de 0,1 à 5 % du poids du mélange polyamide + fibres de verre, la proportion de ces dernières représentant de 1 à 50 %, et de préférence de 10 à 40 % du poids dudit mélange polyamide + fibres de verre.

Par composition à base de polyamide on entend des compositions dont le constituant majoritaire est un polyamide, d'autres polymères pouvant être présents à condition de ne pas modifier fondamentalement les propriétés et le comportement du polyamide mis en œuvre. Des compositions préférées contiennent de 60 à 100 % en poids de polyamide par rapport à la quantité totale de composition et de préférence de 80 à 100 % en poids. Par polyamides on entend les résines semi-cristallines et amorphes ayant une masse moléculaire d'au moins 5 000 et couramment appelées nylons. Les polyamides utilisables comprennent ceux décrits dans les brevets des E.U.A. 2 071 250 ; 2 071 251 ; 2 130 523 ; 2 130 948 ; 2 241 322 ; 2 312 966 ; 2 512 606 et 3 393 210. La résine polyamide peut être produite par condensation de quantités équimolaires d'un acide dicarboxylique saturé contenant de 4 à 12 atomes de carbone avec une diamine, la diamine contenant de 4 à 14 atomes de carbone. On peut utiliser un excès de diamine de manière à obtenir un excès de groupes terminaux amine par rapport aux groupes terminaux carboxyle dans le polyamide. Des exemples de polyamides comprennent le polyhexaméthylène adipamide (nylon 6,6), le polyhexaméthylène azélamide (nylon 6,9), le polyhexaméthylène sébacamide (nylon 6,10) et le polyhexaméthylène dodécaneamide (nylon 6,12), les polyalmides produits par décyclisation de lactames, c'est-à-dire le polycaprolactame, le poly-(laurolactame), le poly(acide 11-amino-undécanoïque), le bis(para-aminocyclohexyl)-méthane dodécanamide. Il est possible aussi d'utiliser dans la présente invention des polyamides préparés par la copolymérisation de deux des polymères ci-dessus ou par la terpolymérisation des polymères ci-dessus ou de leurs constituants, par exemple un copolymère d'acide adipique, d'acide isophtalique et d'hexaméthylènediamine. De préférence, les polyamides sont linéaires avec un point de fusion au-dessus de 200 °C.

Les compositions conformes à l'invention renferment également des fibres de verre. Ces fibres de verre ont, de préférence, une longueur comprise entre 100 μm et 12 mm le diamètre des filaments

unitaires étant généralement compris entre 2 et 20 µm. On donne la préférence aux fibres de type E (tel que défini dans « Handbook of Reinforced Plastics » — Ed. 1964, p. 120), dont le grammage (poids au kilomètre de fil) peut varier entre 600 et 2 500 dtex. Bien que les fibres E soient considérées comme convenant particulièrement bien aux applications auxquelles sont destinées les compositions conformes à l'invention, on peut utiliser d'autres fibres, soit exclusivement, soit en association avec des fibres E. L'ouvrage précité indique (pages 121-122) des exemples de telles fibres.

On utilise généralement dans l'invention des fibres de verre ayant reçu un traitement. D'une part ces fibres ont pu constituer des faisceaux de fibres grâce à l'emploi d'un liant. A titre d'exemples de tels liants, on peut citer l'acétate de polyvinyle, les copolymères d'éthylène et d'esters acryliques, les résines époxy, les polyéthers et polyesters aromatiques. D'autre part, les fibres peuvent être traitées au moyen d'un agent d'ensimage ou de couplage, tel que, par exemple : des composés organosiliciques tels que le vinyltri(éthoxy méthoxy)silane, le γ-aminopropyltriéthoxysilane, le (amino-2 éthylamino)-3 propyl triméthoxysilane, le vinyl(méthacryloyl) tri-méthoxysilane ou des composés tels que les complexes du chrome avec de l'acide méthacrylique.

Ainsi qu'il a été indiqué précédemment, les constituants essentiels des compositions conformes à l'invention sont le polyamide, les fibres de verre et le composé de formule (I).

A titre de variantes, les compositions peuvent renfermer d'autres substances, parmi lesquelles on mentionnera :

A) à titre de charges complémentaires, des matériaux pulvérulents, notamment mica, talc, lithopone, silice calcinée ou des matériaux sous forme de fibres, notamment fibres de carbone, fibres d'amiante, fibres de quartz, fibres de céramique ou d'autres fibres minérales. La proportion de ces charges complémentaires peut atteindre 30 % en poids des fibres de verre ;

B) un composé susceptible de favoriser l'influence du composé de formule (I) sur le polyamide et/ou sur les fibres de verre. Sans que la demanderesse soit, en aucune manière, liée par une quelconque théorie relative à ce mode d'action, on peut, dans les compositions conformes à l'invention faire appel à des catalyseurs favorisant ou accélérant la formation de réactions, notamment entre le polyamide et le composé de formule (I), lesdites réactions pouvant être du type greffage du composé de formule (I) sur le polyamide et/ou introduction du composé de formule (I) dans les chaînes du polyamide, lesdites réactions pouvant, selon la fonctionnalité du composé de formule (I) et la réactivité des fonctions dudit composé, provoquer une réticulation du polyamide. On indique ci-après, à titre d'illustration, des exemples de catalyseurs, étant admis qu'il appartient à l'homme du métier de choisir le catalyseur, compte tenu du processus radicalaire connu de dégradation des chaînes du polyamide et de la réactivité des fonctions éthyléniques du composé de formule (I).

A titre d'illustration des catalyseurs précités, on peut mentionner en particulier les composés peroxygénés, tels que le diméthyl-2,5 di(t.butylperoxy)-2,5 hexyne 3, le peroxyde de dicumyle, le peroxyde de di-t.butyle, le 4,4'-oxybis(triphénylméthylhydroperoxyde), l'hydroperoxyde de t.butyle, le diperphtalate de ditertiobutyle, le perbenzoate de t.butyle, le peracétate de t.butyle, le 2-2bis t.butylperoxybutane, le diméthyl-2,5 di(t-butylperoxy)-2,5 hexane, le 1,3-di t.butylperoxydiisopropylbenzène.

L'opportunité d'utiliser un catalyseur et le choix du produit sont liés notamment à la nature du composé de formule (I).

A titre d'exemple, on peut indiquer que, lorsque l'on utilise un composé de formule (I) à doubles liaisons acryliques il est possible de ne pas utiliser de catalyseur.

D'une manière générale, la quantité de catalyseur est de l'ordre de 1 à 25 %, exprimée en poids par rapport au poids du composé de formule (I).

Les composés conformes à l'invention peuvent en outre renfermer des additifs à effet spécifique, tels que des pigments, lubrifiants, ignifugeants, stabilisants, agents susceptibles de modifier certaines propriétés mécaniques (module d'élasticité, résistance au choc). A titre d'exemple d'agent de ce type, on mentionnera notamment les copolymères élastomériques à base d'oléfine et de dérivés acryliques.

Les compositions peuvent être préparées par simple mélange des divers constituants. Selon une technique préférée, on opère en deux étapes : on mélange, en premier lieu, le polyamide et le composé de formule (I) et, le cas échéant, le catalyseur puis, après homogénéisation du mélange, introduit les fibres de verre et, le cas échéant, les autres additifs mentionnés précédemment en poursuivant l'opération d'homogénéisation. Lorsque le composé de formule (I) est liquide, il peut être avantageux de l'associer au polyamide sous forme de solution très diluée dans un produit volatil, solvant dudit composé mais non solvant du polyamide. Les alcools sont d'un emploi particulièrement intéressant. Ces opérations sont généralement effectuées à température ambiante (de 15 à 30 °C). La composition ainsi préparée peut ensuite être moulée directement par compression à une température comprise entre 240 et 290 °C, puis granulée et moulée par compression ou injection à une température comprise entre 240 et 290 °C. Cette technique est habituellement utilisée du fait de la facilité de mise en œuvre qu'elle apporte.

Il est également possible d'incorporer l'additif de formule (I) dans le polyamide déjà fondu. On évite ainsi qu'il se produise, au cours de la fusion du polyamide, un début de dégradation du composé introduit.

On peut avantageusement utiliser une extrudeuse à une ou plusieurs vis, équipée de buse de dégazage : on introduit l'additif dans la zone de dégazage par une buse de dégazage ou par un orifice spécialement adapté, dans le polyamide fondu.

Les articles préparés à partir des compositions conformes à l'invention présentent un ensemble de propriétés intéressantes. Ils sont remarquables notamment en ce qui concerne les résistances en flexion et en traction et la résistance au choc.

Les méthodes de détermination de ces propriétés sont indiquées plus loin.

De plus, on a trouvé que la résistance au feu, traduite par exemple par l'indice limite d'oxygène (LOI) était sensiblement améliorée.

Du fait de ces propriétés, les compositions selon l'invention conviennent particulièrement pour la réalisation de pièces utilisées dans l'industrie de l'automobile (radiateurs, bacs d'accumulateurs, ventilateurs), pour la fabrication d'ébauches pour usinage en remplacement d'alliages légers, etc...

Les exemples suivants illustrent l'invention.

## Exemples 1 à 4

On prépare un mélange maître en mélangeant intimement : 100 g de poudre de polyhexaméthylène adipamide et 200 ml d'une solution à 10 % en poids dans le méthanol — de tétracrylate de pentaérythritol de formule : $(CH_2{=}CH{-}CO{-}O{-}CH_2)_4{-}C$. Le méthanol est ensuite évaporé.

On prépare ensuite par pesée des mélanges de poudre de polyhexaméthylène adipamide ayant une viscosité inhérente de 1,173 dl/g mesurée en solution à 0,5 % dans le méthanol et du mélange maître préparé comme indiqué ci-dessus, pour avoir des quantités de tétraacrylate exprimées en % par rapport au total polyamide plus 30 % en poids de fibres de verre, de 0,25, 0,50, 1 et 2 et des fibres de verre de 6 mm environ de longueur moyenne comportant comme agent de couplage un γ-aminopropyltriéthoxysilane.

Après obtention à froid d'un mélange homogène, ces compositions sont introduites dans une extrudeuse monovis ayant un diamètre de 20 mm et une longueur de 400 mm de marque Thoret, chauffée à 280 °C. La filière permet d'obtenir un jonc qui, refroidi, est granulé. Avec ces granulés on réalise par injection à 290 °C environ et sous environ 400 bars, des éprouvettes sur lesquelles on mesurera la résistance à la flexion à 20 °C (selon norme ASTM D 790-63), le module en flexion à 20 °C (selon norme ASTM D 790-63 — distance entre appuis : 25,4 mm) et la résistance au choc DYNSTAT à 25 °C sur éprouvettes non entaillée (selon normes NF T 51 017).

Les résultats obtenus sont portés sur le tableau ci-après.

Dans le cas de compositions comportant 0,50 % de tétraaacrylate de pentaérythritol on a mesuré l'indice d'oxygène limite (LOI) selon la norme ASTM D 2863. On trouve un indice LOI de 28 qui doit être comparé à un indice de 24 pour le polyamide seul.

## Exemple 5

On opère comme indiqué à l'exemple 1 mais on remplace le tétraacrylate de pentaerythritol par 1 % de triacrylate de triméthylolpropane.

Les résultats obtenus sont portés sur le tableau ci-après.

## Exemple 6

On opère comme indiqué à l'exemple 1 mais on remplace le tétraacrylate de pentaérythritol par 1 % de diacrylate de butanediol-1,4.

Les résultats obtenus sont portés sur le tableau ci-après.

## Exemple 7

Dans une extrudeuse de même type que celle utilisée à l'exemple 1, on introduit une composition en poudre constituée de polyhexaméthylène apidamide chargé à 30 % de fibres de. verre.

Par l'orifice de dégazage correspondant dans le fût de l'extrudeuse à la zone de fusion à 285 °C, on introduit à l'aide d'une seringue chauffée à 40 °C du tétraacrylate de pentaérythritol en quantité qui corresponde approximativement à 1 % de la composition introduite dans l'extrudeuse. On obtient un jonc qui est granulé et avec les granulés on réalise des éprouvettes destinées aux diverses mesures.

Les résultats portés sur le tableau démontrent que le temps de séjour plus court du réactif permet d'améliorer considérablement les propriétés mécaniques du polyamide.

(Voir Tableau page 5)

Tableau des résultats

| Exemples | (a) Résistance en flexion à 20 °C en MPa | (kg/mm$^2$) | (b) Module en flexion à 21 °C en MPa | (kg/mm$^2$) | (c) Résistance au choc à 25 °C en J/cm$^3$ | (kg cm/cm$^3$) |
|---|---|---|---|---|---|---|
| 1 | 206,9 | (21,1) | 6 769 | (690) | 2,90 | (29,6) |
| 2 | 204 | (20,8) | 6 377 | (650) | 2,99 | (30,5) |
| 3 | 202 | (20,6) | 6 475 | (660) | 3,35 | (34,1) |
| 4 | 195,2 | (19,9) | 6 209 | (633) | 2,64 | (26,9) |
| 5 | 185,4 | (18,9) | 5 808 | (592) | 2,67 | (27,2) |
| 6 | 181,5 | (18,5) | 5 464 | (557) | 2,55 | (26) |
| 7 | 221,7 | (22,6) | 7 681 | (783) | 2,82 | (28,7) |
| Témoin | 181,5 | (18,5) | 5 935 | (605) | 2,14 | (21,8) |

Le témoin a été préparé en suivant le mode opératoire décrit dans l'exemple 1 mais à partir d'une composition ne comprenant que le polyamide et les fibres de verre.

(a) : NORME ASTM D 790-63

(b) : NORME ASTM D 790-63 (distance entre appuis : 25,4 mm)

(c) : NORME NF T 51017 (choc DYNSTAT, éprouvette non entaillée).

On constate que si la résistance en flexion n'est que peu ou pas augmentée et si le module en flexion varie peu par rapport à celui du polyamide seul, par contre la résistance au choc est très fortement augmentée : 56 % dans le meilleur des cas et presque 20 % dans le plus mauvais des cas exemplifiés.

## Revendications

1. Compositions à base de polyamides renforcés par des fibres de verre, caractérisées en ce qu'elles renferment 0,1 à 5 % en poids par rapport à la composition d'un ou plusieurs composés de formule générale :

$$[CH_2{=}CR{-}CO{-}A]_{\overline{n}}X \qquad (I)$$

dans laquelle :

R représente un atome d'hydrogène ou un radical méthyle ;

n représente un nombre entier égal à 2, 3 ou 4 ;

le symbole A représente un radical —O—, —NH— ou un lien valentiel simple ;

le symbole X, quand A représente un radical —O— ou —NH—, représente : un radical organique de valence n dérivé d'un hydrocarbure aliphatique saturé linaire ou ramifié ayant de 1 à 20 atomes de carbone et pouvant renfermer un ou plusieurs ponts oxygène et une ou plusieurs fonctions hydroxyles ; un radical aralkylène pouvant être ramifié et pouvant comporter un ou plusieurs ponts oxygène ; ou un cycle triazinique di- ou trivalent ;

le symbole X, quand A représente un lien valentiel simple, représente uniquement un cycle triazinique di- ou trivalent.

2. Compositions selon la revendication 1, caractérisées en ce qu'elles renferment 0,2 à 2 % en poids par rapport à la composition d'un ou plusieurs composés de formule (I).

3. Compositions selon la revendication 1, caractérisées en ce que le composé de formule (I) est le tétraacrylate de pentaérythritol.

4. Compositions selon la revendication 1, caractérisées en ce qu'elles peuvent renfermer en outre un catalyseur capable de favoriser l'action des composés de formules (I).

5. Produits conformés obtenus à partir des compositions selon la revendication 1.

## Claims

1. Compositions based on polyamides reinforced with glass fibres, characterised in that they contain 0.1 to 5 % by weight, relative to the composition, of one or more compounds of the general formula :

$$[CH_2{=}CR{-}CO{-}A]_{\overline{n}}X \qquad (I)$$

in which :

R represents a hydrogen atom or a methyl radical,

n represents an integer equal to 2, 3 or 4,

the symbol A represents a —O— or —NH— radical or a single valency bond,

if A represents a —O— or —NH— radical, the symbol X represents an organic radical of the valency n which is derived from a linear or branched saturated aliphatic hydrocarbon having from 1 to 20 carbon atoms and can contain one or more oxygen bridges and one or more hydroxyl groups, an aralkylene radical which can be branched and can contain one or more oxygen bridges or a divalent or trivalent triazine ring, and

if A represents a single valency bond, the symbol X solely represents a divalent or trivalent triazine ring.

2. Compositions according to Claim 1, characterised in that they contain 0.2 to 2 % by weight, relative to the composition, of one or more compounds of the formula (I).

3. Compositions according to Claim 1, characterised in that the compound of the formula (I) is pentaerythritol tetraacrylate.

4. Compositions according to Claim 1, characterised in that they can moreover contain a catalyst capable of assisting the action of the compounds of the formula (I).

5. Shaped products obtained from the compositions according to Claim 1.

**Ansprüche**

1. Massen auf Basis von durch Glasfasern verstärkten Polyamiden, dadurch gekennzeichnet, daß sie 0,1 bis 5 Gew.-%, bezogen auf die Masse, einer oder mehrerer Verbindungen der allgemeinen Formel :

$$[CH_2{=}CR{-}CO{-}A]_{\overline{n}}X \qquad (I)$$

in welcher

R ein Wasserstoffatom oder einen Methylrest darstellt ;

n eine ganze Zahl gleich 2, 3 oder 4 darstellt ;

das Symbol A einen Rest —O—, —NH— oder eine einfache Valenzbindung darstellt ;

das Symbol X, wenn A einen Rest —O— oder —NH— darstellt, bedeutet : einen organischen Rest mit der Wertigkeit n, abgeleitet von einem gesättigten geradkettigen oder verzweigten aliphatischen Kohlenwasserstoff mit 1 bis 20 Kohlenstoffatomen, der eine oder mehrere Sauerstoffbrücken und eine oder mehrere Hydroxylfunktionen enthalten kann ; einen Aralkylenrest, der verzweigt sein kann und eine oder mehrere Sauerstoffbrücken tragen kann ; oder zwei- oder dreiwertigen Triazinring :

das Symbol X, wenn A eine einfache Valenzbindung darstellt, ausschließlich einen zwei- oder dreiwertigen Triazinring darstellt, enthalten.

2. Massen nach Anspruch 1, dadurch gekennzeichnet, daß sie 0,2 bis 2 Gew.-%, bezogen auf die Masse, einer oder mehrerer Verbindungen der Formel (I) enthalten.

3. Massen nach Anspruch 1, dadurch gekennzeichnet, daß die Verbindung der Formel (I) Pentaerythritoltetraacrylat ist.

4. Massen nach Anspruch 1, dadurch gekennzeichnet, daß sie außerdem einen Katalysator enthalten können, der die Wirkung der Verbindungen der Formel (I) zu begünstigen vermag.

5. Entsprechende Produkte, erhalten aus den Massen nach Anspruch 1.